# EUROPEAN PATENT SPECIFICATION

(11) **EP 1 113 895 B1**
(45) Date of publication and mention of the grant of the patent: **23.11.2005**
(21) Application number: 99967823.8
(22) Date of filing: 19.08.1999
(51) Int. Cl.: B23B 51/00, B23P 15/32

(54) **DRILL TOOL ASSEMBLY**
BOHRWERKZEUGZUSAMMENBAU
ENSEMBLE TREPAN

(30) Priority: 21.08.1998 US 137647
(43) Date of publication of application: 11.07.2001
(73) Proprietor: Allied Machine & Engineering Corp., Dover, OH 44622 (US)
(72) Inventor: NUZZI, Joseph, P., Dover, OH 44622 (US); STOKEY, Timothy, G., Dover, OH 44622 (US)
(74) Representative: Fritsche, Rainer
(86) International application number: PCT/US1999/019109
(87) International publication number: WO 2000/010759

(56) References cited:
- EP-A- 0 295 946
- EP-A- 0 506 238
- US-A- 4 527 643
- US-A- 5 137 398
- US-A- 5 154 550
- US-A- 5 474 407
- US-A- 5 611 251

## Description

### Technical Field

The present invention relates to a drill tool assembly and a drill insert, as disclosed in the preambles of claims 1 and 14 respectively. Such a drill tool assembly and a drill insert are known from document US-A-5744407.

### Background of the Invention

Drill tools are used to produce holes or countersinks in a production metalworking environment. There are known drill tools which use a drill insert having cutting surfaces selectively secured to a holder. The drill insert is generally constructed of high speed steel, carbide or other materials as necessitated by the work piece. The drill insert is fit into a corresponding slot in the holder, and is secured there with retaining screws. During a drilling operation, the holder with the drill insert in place is indexed in relation to the part. From this set point, subsequent movements of the machining operation are calculated, such as the location and the depth of the hole to be cut. During the machining operation the drill insert may become dull and replacement may be required. Ideally, the drill tool allows the holder to remain in the machine in an indexed position while the drill insert is replaced. The new drill insert needs to index to the same place within the tool holder as the original insert, and any machining errors in the insert must be minimized.

Ideally the centerline of every drill insert will correspond with the axial centerline of the holder, and the cutting surfaces or point geometry formed precisely relative to this centerline. A change in the index position of the new bit within the slot of the holder can cause significant error. Additionally, the insert itself must be machined with cutting surfaces and an overall outside diameter which must be kept to within very close tolerances to avoid other possible errors when assembled with a tool holder. Of significant importance is maintaining the outside diameter also in high tolerance with respect to the axial centerline of the tool holder. In the methods of manufacturing drill inserts of this type, no effective remedy to errors with respect to overall outside diameter and relative positioning of the cutting surfaces associated with the insert have been found. This in turn causes TIR errors when assembled with a holder and used in a drilling operation. There is therefore a need for a drilling tool, wherein a drill insert can be precisely manufactured to mate with a tool holder in a manner which provides self-indexing and self-alignment of the drill insert with respect to the tool holder.

A variety of methods of attaching a drill insert to the holder have been attempted to properly index the drill insert within the holder. Such attempts include using a locating slot formed on the bottom of the drill insert opposite the cutting edge. The slot mates with a corresponding pin or dowel positioned in the holder. The dowel pin is of a nominal size and must be manufactured within a tolerance limit, and the corresponding slot in the drill insert also has a size tolerance to allow the dowel to be inserted. These manufacturing tolerances cause a clearance to occur between the locating dowel in the holder and the locating slot in the drill insert. This clearance does not promote repeatability in placement of the drill inserts within the holder, and instead adds to the index error as described above.

A drilling tool in which a precise centering of the drilling blade is possible is described in U.S. Patent No. 5,474,407. According to the invention this object is attained in the case of a drilling tool in that the nominal width of the centering slot is selected to be greater than that of the portion of the centering pin engaging in the centering slot and that the direction and amount of the offset of the center axes of the bore of the drilling blade and bore of the limb of the clamping slot are so selected that in the tightened state of the threaded pin only one side face of the centering slot bears on one side of the centering pin in the centered position of the drilling blade.

Other configurations include biasing the insert against one or more seating surfaces, such as by offsetting the retaining screw hole in the tool holder with respect to the corresponding hole in the drill insert. This offset causes a camming action to occur when the retaining screw in tightened forcing the drill insert to be seated against the seating surfaces. Although this may lead to reduced errors in some cases, it is also possible that if the drill insert is positioned in the slot in an orientation which differs from the position of the insert when manufactured, the error could be increased. Though it may be possible to machine the locating slot in the insert to be exactly centered and have very low tolerances on the finished size of the slot, this requires extremely tight tolerances be kept for the placement and dimensions of the locating slot with respect to the centerline of the drill insert. Manufacturing within the tight tolerances required for this indexing system would dramatically increase the price of each drill insert. This would also make use of the insert and assembly holder more difficult, as the insert would have to be precisely positioned to receive the pin, and forced into the proper location about the locating pin.

It therefore would be desirable to have a drill tool assembly which allows a drill insert to be precisely positioned with respect to the tool holder to reduce errors in the positioning of the insert relative to the holder, but which allows simplified and consistent assembly of the insert with the holder.

### Summary of the Invention

Based upon the foregoing, the invention concerns a drill tool assembly with the features of claim 1 and a drill insert with the features of claim 14.

Accordingly, an object of this invention is to provide a novel drill tool assembly in which a drill insert may be consistently and precisely positioned so that the centerline of the drill insert, locating dowel and holder are co-linear.

It is yet another object of this invention to provide a drill tool assembly in which the user of the drill insert assembly cannot improperly position the drill insert into the holder.

This along with other objects and advantages of the present invention will become more readily apparent from a reading of the detailed description taken in conjunction with the drawings and the claims.

### Brief Description of the Drawings

The invention and developments thereof are described in more detail in the following by way of embodiments with reference to the drawings, in which:
**Fig. 1** is an exploded assembly view of the drill tool assembly according to a preferred embodiment.
**Fig. 2** is a partial perspective view of the holder associated with the assembly.
**Fig. 3** is a perspective view of the locating dowel of the preferred embodiment.
**Fig. 4** is a side view of the drill insert of the preferred embodiment.
**Fig. 5** shows a partial sectional view of the assembly taken along the centerline thereof.
**Fig. 6** is a enlarged partial sectional view showing the locating dowel positioned with respect to the locating slot of the drill insert.
**Fig. 7** is a sectional view of the assembly showing the drill insert inserted improperly.

### Detailed Description of the Invention

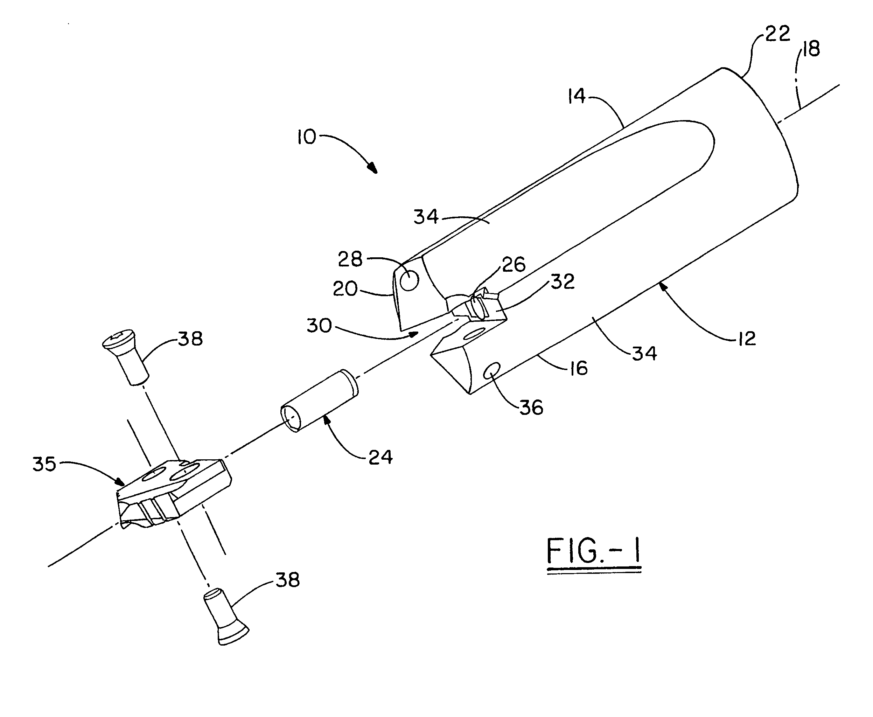

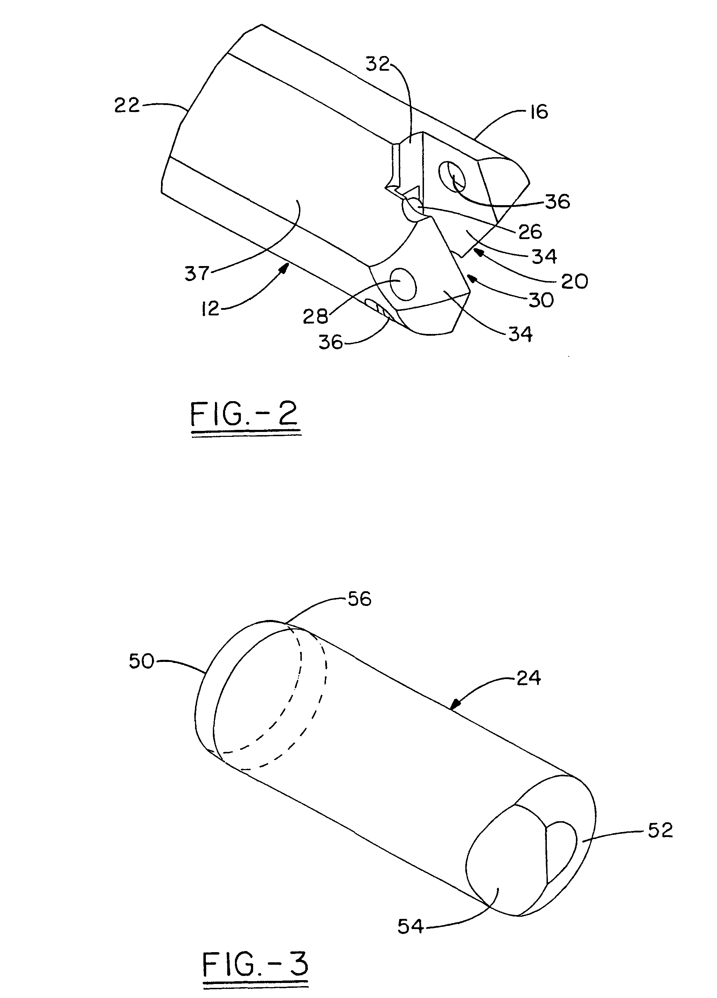

Turning now to a preferred embodiment of the invention, **Fig. 1** illustrates a drill tool assembly generally indicated **10.** Drill tool assembly **10** comprises a holder **12,** which has a shank **14** and head portion **16** associated therewith. In the preferred embodiment, holder **12** has in general a cylindrical shape with a first end **20** and second end **22** with the second end **22** and portion of shank **14** adapted to be fixedly attached in a drilling machine for use. As shown in **Fig. 2,** the first end **20** of holder **12** has a clamping or holder slot **30** which may extend across the entire diameter of the head portion **16** or at least over a center portion thereof at the general location of the rotational axis **18** of holder **12.** The holder slot **30** has a bottom wall **32** positioned in substantially perpendicular orientation relative to the rotational axis **18** of the holder **12.** In the preferred embodiment, the assembly **10** further includes a locating boss or dowel pin **24** which is positioned precisely with respect to the axis **18** and extends from the bottom wall **32** of the holder slot **30.** The pin **24** may be positioned within a hole **26** extending downwardly from the bottom wall **32** of slot **30** along the axis **18** of the holder body in a press fit other relationship to position pin **24.** Alternatively, the locating boss which in the preferred embodiment comprises pin **24,** may be configured in another manner to achieve the corresponding functionality of pin **24,** such as an integral member extending from bottom wall **32.** Within the holder slot **30,** a drill insert **35** is precisely positioned with respect to the holder **12** to perform the desired drilling function in conjunction therewith. As will be hereinafter described in more detail, the insert **35** has a point geometry comprising a plurality of cutting surfaces which are precisely positioned with respect to the axis **18** of the holder **12** to minimize errors in a resulting drilling operation using assembly **10.**

More particularly, the preferred embodiment of holder **12** is shown in **Fig. 2,** and may be configured to include at its first end **20** a pair of clamping arms **34** which extend about holder slot **30.** The clamping arms **34** preferably include apertures **36** which accommodate screws **38** (see Fig. 1) to secure the drill insert **35** in its position within the holder slot **30.** In the preferred configuration, the holes **36** are threaded to engage screws **38,** and mate with screw holes formed in the drill insert **35** in a predetermined manner to precisely locate the drill insert in a predetermined location within holder slot **30** as will be described in more detail. Each of the clamp arms **34** may also include a lubrication vent **28** which allows the application and flow of lubrication adjacent the cutting surfaces of the drill insert to facilitate the drilling operation. The clamp arms **34** may also include angled or curved surfaces which facilitate chip removal via chip evacuating grooves **37** on each side of the holder **12.** The seating surface **32** is also shown to be designed as a planar surface which corresponds to the planar bottom portion of the preferred drill insert **35,** although another configuration of bottom surface **32** may be employed and is contemplated herein.

Again in the preferred embodiment, the locating boss or dowel pin **24** is shown more particularly in **Fig. 3.** The locating pin **24** includes a first end **50** which is inserted within an aperture formed in holder **12,** and particularly within the bottom or seating surface **32** of the holder slot **30** as previously described. The first end **50** may have a tapered portion **56** which simplifies insertion of the pin **24** within this aperture. The locating pin **24** may be press fit into the aperture or otherwise secured in the desired location, so as to be precisely positioned with respect to the rotational axis **18** of the holder **12** as well as with respect to the seating surface **32** of the holder slot **30.** The top end **52** of the locating pin **24** includes an orientation flat **54.** The function of the orientation flat **54** will be described hereafter.

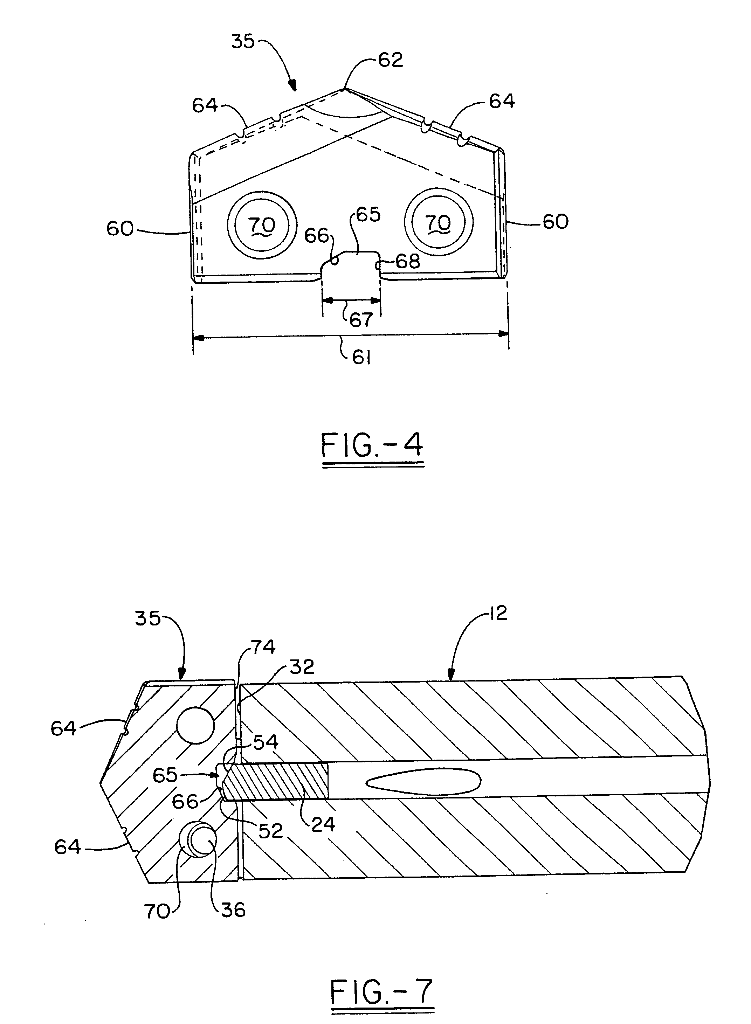

Turning to **Fig. 4,** the preferred embodiment of the drill insert **35** is shown. In the preferred embodiment, the drill insert **35** may form a spade drill blade, with side edges **60** of the blade being generally parallel with the rotational axis **18** of the holder **12** once the insert **35** is positioned and secured with holder **12.** When secured with holder **12,** drill insert **35** will also have a rotational axis which is coaxial with axis **18** of holder **12.** The drill insert **35** will also have a width **61** which upon being rotated with holder **12** forms an outside diameter of the assembled tool. The drill insert **35** further includes cutting edges **64** on its upper surface in the form of an obtuse V-shape, with cutting edges **64** on each side of the axial center **62.** The cutting edges **64** may include a plurality of cutting components which cooperate together to provide the desired cutting surface **64** for the material and/or drilling application. In general, the insert **35** is designed to cut when rotationally driven in conjunction with holder **12** in a predetermined direction, and is not reversible, although such drilling blade configurations are known to those skilled in the art and could be used in conjunction with the present invention if desired. The drill insert **35** further preferably includes apertures **70** which cooperate with the apertures **36** in clamp arms **34** to secure insert **35** within holder slot **30** and seated against seating surface **32.** Additionally, insert **35** includes a locating slot **65** having a width **67** which allows positioning of the locating pin **24** therein. In the preferred embodiment, the dimension **67** is chosen to be appreciably larger than the dimensions of the locating pin or boss **24** associated with the holder **12** and extending upwardly from bottom surface **32** of the holder slot **30.** The locating slot **65** includes a seating surface **68** as well as a locating surface **66** which allow for correct and precise positioning of the insert **35** with respect to holder **12** as desired. The locating surface **66** is preferably formed as a chamfered surface which in turn will correspond with the orientation flat **54** as described with reference to locating pin **24** as will be described hereafter. Other configurations of the locating surface **66** along with corresponding orientation surface **54** would occur to those skilled in the art and are contemplated herein. In general, the locating surface **66** allows insert **35** to be positioned with respect to holder **12** in only one orientation, and further facilitates precise positioning of the insert **35** so as to minimize any tolerance errors in the drill tool assembly.

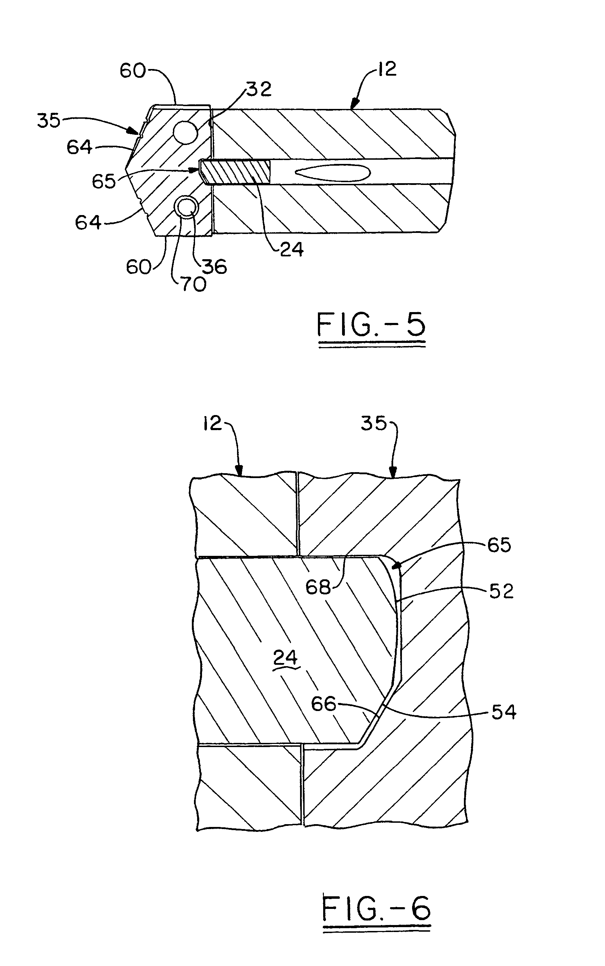

Turning to **Figs. 5** and **6,** the assembled tool **10** is shown in cross section, indicating the cooperative relationship between insert **35** and holder **12.** As seen in this figure, the insert **35** is positioned so as to be seated against the bottom surface **32** of the holder slot for operation. In addition, the insert **35** is precisely positioned such that the point geometry comprising the cutting surfaces thereof is precisely configured relative to the rotational axis of the holder **12.** In this way, the effective outside diameter of the insert **35** when rotationally driven in conjunction with holder **12** is precisely controlled. As seen more distinctly in **Fig. 6**, insert **35** is positioned such that locating slot **65** cooperates with locating pin **24** in a predetermined manner. More particularly, the locating surface **66** of slot **65** cooperates with the orientation flat **54** of pin **24** to allow insert **35** to only be positioned in this orientation relative to holder **12.** It is also seen in **Fig. 5,** that in the preferred embodiment, the apertures **36** formed in the clamp arms **34** of holder **12** are formed in offset relationship to apertures **70** formed in insert **35.** Additionally, each of the apertures **36** and **70** are preferably formed with countersunk portions formed as a bearing surface adapted to be engaged by a corresponding tapered or like surface on the screws or other fastening mechanism **38.** The enlarged clamping head of the screws **38** may be of any convenient shape, such as conical, ball-shaped, or in another form to correspond with the similar surfaces in the tool holder **12** and insert **35.** In a typical fashion, by offsetting the axes of the apertures **36** and **70,** upon securing insert **35** within slot **30** by means of screws **38,** the insert **35** will be forced downwardly against the seating surface **32** and also the seating surface **68** of slot **65** will be forced against locating boss **24.** The location of boss **24** and therefore of seating surface **68** is predetermined to position the point geometry of insert **35** to coincide with rotational axis **18** of holder **12.**

By precisely positioning surface **68** with respect to the outside dimensions and point geometry of insert **35,** the assembled tool will virtually eliminate errors in positioning of the insert **35** with respect to holder **12.** This degree of accuracy is accomplished by machining the insert **35,** and particularly those dimensional characteristics mentioned above, in an orientation relative to a work piece holder which stimulates holder **12** of the assembly **10**.

As shown in **Fig. 7,** if the insert **35** is not oriented properly with respect to holder **12,** the portion of top end **52** adjacent orientation flat **54** will bear against portion **66** of the locating slot **65** so as not to allow insert **35** to be seated against seating surface **32** of holder slot **30.** Additionally, the apertures **36** and **70** in the holder **12** and insert **35** respectively, will not align to allow the screw or other fastening mechanism to be operative. Thus, the insert **35** cannot be inserted improperly, thereby ensuring that the insert **35** is properly positioned with respect to the holder **12** as desired.

## Claims

1. A drill tool (10) assembly comprising:
a holder (12) having first and second ends (20, 22) and a rotational axis (18), wherein said second end (22) is adapted to be fixedly attached in a drilling machine, and said first end (20) comprises a holder slot (30) oriented perpendicularly to said rotational axis (18) of said holder (12) having a bottom seating surface (32) over at least a portion of said holder slot (30), said holder slot (30) also including a locating boss (24) having a first surface and a second surface with at least one of said surfaces being located in a predetermined position with respect to said rotational axis (18) of said holder (12) and substantially parallel to said rotational axis (18) and extending from said bottom seating surface (32), wherein said locating boss has at least a first orientation surface (54) on at least a portion thereof,
a drill insert (35) having a first and a second cutting surface (64) and first and second sides, said first side adapted to have at least a portion thereof positioned in said holder slot (30) in seating engagement with said bottom seating surface (32), wherein the rotational axis (18) of said drill insert (35), locating boss (24), and holder (12) are collinear, and including a locating slot (65) adapted to be positioned in a predetermined orientation relative to said locating boss (24) provided in said holder slot (30) and formed in said bottom side,
**characterized in that** said locating slot (65) includes at least a second orientation surface (66) which cooperates with said first orientation surface (54) to allow said insert (35) to be seated in a single orientation against said bottom seating surface (32) only if oriented properly with respect to said holder slot (30).

2. The drill tool assembly according to claim 1, **characterized in that** said holder (12) further includes at least one clamp arm (34) provided adjacent said holder slot (30), said at least one clamp arm (34) including at least one bore (36) communicating with said holder slot (30), wherein a fastening mechanism (38) is positioned in said bore (36) to engage said drill insert (35) for securing said insert (35) within said holder slot (30).

3. The drill tool assembly according to claim 2, **characterized in that** said drill insert (35) includes at least one bore (70) cooperating with said at least one bore (36) in said at least one clamp arm (34), wherein a fastening mechanism (38) engages said at least one bore (70) in said drill insert (35) for securing it in position within said holder slot (30).

4. The drill tool assembly according to claim 3, **characterized in that** said at least one bore (36) in said at least one clamp arm (34) is offset from said at least one bore (70) in said drill insert (35) at least to urge said drill insert (35) against said bottom seating surface (32) of said holder slot (30).

5. The drill tool assembly according to any of claims 1 to 4, **characterized in that** said locating boss (24) of said holder slot (30) further includes at least a first seating surface (32) being disposed in predetermined relationship to said rotational axis (18), and that said locating slot (65) of said drill insert (35) has a portion thereof seated against said first seating surface (32).

6. The drill tool assembly to any of claims 1 to 5, **characterized in that** said locating boss is a dowel pin (24) having first and second ends (50, 52), wherein said first end (50) is received in a bore (26) formed in said holder slot (30), and said second end (52) extends from said bottom seating surface (32) of said holder slot (30) a predetermined distance.

7. The drill tool assembly according to any of claims 1 to 6, **characterized in that** said first orientation surface (54) of said locating boss (24) has a predetermined shape, and said second orientation surface (66) of said locating slot (65) substantially matches said shape so that said first and second orientation surfaces (54, 66) mate with one another so as to be positioned adjacent one another when said drill insert (35) is oriented properly with respect to said holder slot (30).

8. The drill tool assembly according to any of claims 1 to 7, **characterized in that** said drill insert (35) is generally plate shaped and has a predetermined width (61) which defines the outside diameter of a bore formed by said assembly (10).

9. The drill tool assembly according to any of claims 1 to 8, **characterized in that** said second side of said drill insert (35) includes at least one cutting surface (64) formed thereon.

10. The drill tool assembly according to any of claims 1 to 8, **characterized in that** said second side of said drill insert (35) includes at least two cutting surfaces (64) extending from a central point (62), and defining the point geometry of the insert (35).

11. The drill tool assembly according to claim 10, **characterized in that** said point geometry of said drill insert (35) is positioned in predetermined relationship to said rotational axis (18) of said holder (12).

12. The drill tool assembly according to any of claims 1 to 11, **characterized in that** a biasing mechanism (36, 38, 70) urges said drill insert (35) at least against said bottom seating surface (32) of said holder slot (30) if oriented properly with respect to said holder slot (30).

13. The drill tool assembly according to any of claims 1 to 12, **characterized in that** a biasing mechanism (36, 38, 70) urges said drill insert (35) at least against a surface of said locating boss (24) to position said drill insert (35) in predetermined relation to said rotational axis (18).

14. A drill insert for use in a drill tool assembly (10) comprising:
a body member having a rotational axis (18), a first side including a first and a second cutting surface (64) associated therewith, and a second side including a locating slot (65) formed therein, wherein said locating slot (65) is adapted to be positioned in a predetermined orientation relative to a locating boss (24) provided in a holder slot (30) of a holder (12), so that the rotational axis (18) of the body member is collinear with a rotational axis (18) of the holder (12) and said locating boss (24),
**characterized in that** said body member has first and second side edges (60) which define a predetermined width (61), and that said locating slot (65) has at least one seating surface (68) and at least one orientation surface (66) enabling said drill insert (35) to be positioned in only one orientation in a holder (12) with which said drill insert (35) is to be used, wherein said at least one seating surface (68) is oriented substantially parallel to the side edges (60) of said body member and, wherein said orientation surface is a chamfered surface (66).

15. The drill insert according to claim 14, **characterized in that** said body member is generally plate shaped.

16. The drill insert according to claim 14 or 15, **characterized in that** said first side of said body includes at least two cutting surfaces (64) extending from a central point (62) of said first side and defining a point geometry which is positioned in predetermined relationship to at least one seating surface (66) associated with said locating slot (65).

## Patentansprüche

1. Bohrwerkzeuganordnung (10), enthaltend:
einen Halter (12) mit einem ersten und einem zweiten Ende (20, 22) sowie einer Drehachse (18), wobei das zweite Ende (22) dazu geeignet ist, an einer Bohrmaschine fest angebracht zu werden, und wobei das erste Ende (20) einen Halteschlitz (30) aufweist, der senkrecht zu der Drehachse (18) des Halters (12) ausgerichtet ist und der eine untere Sitzfläche (32) über zumindest einen Abschnitt des Halteschlitzes (30) besitzt, wobei der Halteschlitz (30) darüber hinaus einen Zentriervorsprung (24) aufweist, der eine erste Fläche und eine zweite Fläche besitzt, wobei zumindest eine der Flächen in einer vorbestimmten Position mit Bezug auf die Drehachse (18) des Halters (12) und im Wesentlichen parallel zu der Drehachse (18) angeordnet ist und sich von der unteren Sitzfläche (32) aus erstreckt, wobei der Zentriervorsprung zumindest eine erste Ausrichtfläche (54) an zumindest einem Abschnitt aufweist,
einen Bohreinsatz (35) mit einer ersten sowie einer zweiten Schneidfläche (64) und einer ersten sowie zweiten Seite, wobei die erste Seite dazu ausgestaltet ist, zumindest einen Abschnitt zu besitzen, der in dem Halteschlitz (30) in Sitzeingriff mit der unteren Sitzfläche (32) angeordnet ist, wobei die Drehachse (18) des Bohreinsatzes (35), des Zentriervorsprungs (24) und des Halters (12) kollinear zueinander angeordnet sind, und wobei der Bohreinsatz (35) einen Zentrierschlitz (65) besitzt, der so ausgestaltet ist, in einer vorbestimmten Ausrichtung relativ zu dem Zentriervorsprung (24) positioniert zu werden, der in dem Halteschlitz (30) vorgesehen ist und an der Unterseite ausgebildet ist,
**dadurch gekennzeichnet, dass** der Zentrierschlitz (65) zumindest eine zweite Ausrichtfläche (66) besitzt, welche mit der ersten Ausrichtfläche (54) zusammenwirkt, um dem Einsatz (35) nur bei richtiger Ausrichtung gegenüber dem Halteschlitz (30) zu ermöglichen, in einer einzigen Ausrichtung gegen die untere Sitzfläche (32) zu sitzen.

2. Bohrwerkzeuganordnung nach Anspruch 1, **dadurch gekennzeichnet, dass** der Halter (12) weiterhin zumindest einen Klemmarm (34) besitzt, der benachbart dem Halteschlitz (30) vorgesehen ist, wobei der zumindest eine Klemmarm (34) wenigstens eine Bohrung (36) aufweist, die mit dem Halteschlitz (30) in Verbindung steht, wobei ein Befestigungsmechanismus (38) in der Bohrung (36) angeordnet ist, um mit dem Bohreinsatz (35) zu dessen Befestigung innerhalb des Halteschlitzes (30) in Eingriff zu gelangen.

3. Bohrwerkzeuganordnung nach Anspruch 2, **dadurch gekennzeichnet, dass** der Bohreinsatz (35) zumindest eine Bohrung (70) enthält, die mit der zumindest einen Bohrung (36) in dem wenigstens einen Klemmarm (34) zusammenwirkt, wobei ein Befestigungsmechanismus (38) in Eingriff mit der zumindest einen Bohrung (70) in dem Bohreinsatz (35) zu dessen Positionsfixierung innerhalb des Halteschlitzes (30) gelangt.

4. Bohrwerkzeuganordnung nach Anspruch 3, **dadurch gekennzeichnet, dass** die zumindest eine Bohrung (36) in dem wenigstens einen Klemmarm (34) gegenüber der zumindest einen Bohrung (70) in dem Bohreinsatz (35) versetzt ist, um mindestens den Bohreinsatz (35) gegen die untere Sitzfläche (32) des Halteschlitzes (30) zu drängen.

5. Bohrwerkzeuganordnung nach einem der Ansprüche 1 bis 4, **dadurch gekennzeichnet, dass** der Zentriervorsprung (24) des Halteschlitzes (30) weiterhin zumindest eine erste Sitzfläche (32), die in einer vorbestimmten Beziehung zu der Drehachse (18) angeordnet ist, aufweist und dass der Zentrierschlitz (65) des Bohreinsatzes (35) einen Abschnitt besitzt, der an der ersten Sitzfläche (32) anliegt.

6. Bohrwerkzeuganordnung nach einem der Ansprüche 1 bis 5, **dadurch gekennzeichnet, dass** der Zentriervorsprung ein Passstift (24) mit einem ersten sowie einem zweiten Ende (50, 52) ist, wobei das erste Ende (50) in einer Bohrung (26), die in dem Halteschlitz (30) ausgebildet ist, aufgenommen ist und wobei sich das zweite Ende (52) von der unteren Sitzfläche (32) des Halteschlitzes (30) aus über eine vorbestimmte Strecke erstreckt.

7. Bohrwerkzeuganordnung nach einem der Ansprüche 1 bis 6, **dadurch gekennzeichnet, dass** die erste Ausrichtfläche (54) des Zentriervorsprungs (24) eine vorbestimmte Form aufweist und dass die zweite Ausrichtfläche (66) des Zentrierschlitzes (65) im Wesentlichen mit dieser Form übereinstimmt, so dass die erste und die zweite Ausrichtfläche (54, 66) zueinander passen, um so benachbart zueinander angeordnet zu werden, wenn der Bohreinsatz (35) gegenüber dem Halteschlitz (30) richtig ausgerichtet ist.

8. Bohrwerkzeuganordnung nach einem der Ansprüche 1 bis 7, **dadurch gekennzeichnet, dass** der Bohreinsatz (35) im Wesentlichen plattenförmig ist und eine vorbestimmte Breite (61) besitzt, welche den Außendurchmesser einer Bohrung, die durch die Anordnung (10) hergestellt wird, definiert.

9. Bohrwerkzeuganordnung nach einem der Ansprüche 1 bis 8, **dadurch gekennzeichnet, dass** die zweite Seite des Bohreinsatzes (35) zumindest eine Schneidfläche (64) enthält, die darin ausgebildet ist.

10. Bohrwerkzeuganordnung nach einem der Ansprüche 1 bis 8, **dadurch gekennzeichnet, dass** die zweite Seite des Bohreinsatzes (35) zumindest zwei Schneidflächen (64) aufweist, welche sich von einem Mittenpunkt (62) aus erstrecken und welche die Punktgeometrie des Einsatzes (35) definieren.

11. Bohrwerkzeuganordnung nach Anspruch 10, **dadurch gekennzeichnet, dass** die Punktgeometrie des Bohreinsatzes (35) in einer vorbestimmten Beziehung zu der Drehachse (18) des Halters (12) positioniert ist.

12. Bohrwerkzeuganordnung nach einem der Ansprüche 1 bis 11, **dadurch gekennzeichnet, dass** ein Vorspannmechanismus (36, 38, 70) den Bohreinsatz (35) zumindest gegen die untere Sitzfläche (32) des Halteschlitzes (30) drängt, wenn der Einsatz gegenüber dem Halteschlitz (30) richtig ausgerichtet ist.

13. Bohrwerkzeuganordnung nach einem der Ansprüche 1 bis 12, **dadurch gekennzeichnet, dass** ein Vorspannmechanismus (36, 38, 70) den Bohreinsatz (35) zumindest gegen eine Fläche des Zentriervorsprungs (24) drängt, um den Bohreinsatz (35) in einer vorbestimmten Beziehung zu der Drehachse (18) zu positionieren.

14. Bohreinsatz zur Verwendung bei einer Bohrwerkzeuganordnung (10), enthaltend:
ein Körperelement mit einer Drehachse (18), einer ersten Seite, die eine erste und eine zweite Schneidfläche (64) aufweist, die damit in Verbindung stehen, und einer zweiten Seite, welche einen Zentrierschlitz (65), der darin ausgebildet ist, besitzt, wobei der Zentrierschlitz 65 dazu ausgestaltet ist, in einer vorbestimmten Ausrichtung relativ zu einem Zentriervorsprung (24), der in dem Halteschlitz (30) eines Halters (12) vorgesehen ist, positioniert zu werden, so dass die Drehachse (18) des Körperelements kollinear mit einer Drehachse (18) des Halters (12) und des Zentriervorsprungs (24) ist,
**dadurch gekennzeichnet, dass** das Körperelement eine erste sowie eine zweite Seitenkante (60) besitzt, welche eine vorbestimmte Breite (61) definieren, und dass der Zentrierschlitz (65) zumindest eine Sitzfläche (68) und wenigstens eine Ausrichtfläche (66) enthält, welche es dem Bohreinsatz (35) ermöglichen, in nur einer Ausrichtung in einem Halter (12) positioniert zu werden, mit dem zusammen der Bohreinsatz (35) eingesetzt werden soll, wobei zumindest eine Sitzfläche (68) im Wesentlichen parallel zu den Seitenkanten (60) des Körperelements ausgerichtet ist und wobei die Ausrichtfläche eine abgeschrägte Fläche (66) ist.

15. Bohreinsatz nach Anspruch 14, **dadurch gekennzeichnet, dass** das Körperelement im Wesentlichen plattenförmig ist.

16. Bohreinsatz nach Anspruch 14 oder 15, **dadurch gekennzeichnet, dass** die erste Seite des Körpers zumindest zwei Schneidflächen (64) aufweist, die sich von einem Mittenpunkt (62) der ersten Seite aus erstrecken und eine Punktgeometrie definieren, welche in einer vorbestimmten Beziehung zu zumindest einer Sitzfläche (66), die zu dem Zentrierschlitz (65) gehört, positioniert ist.

## Revendications

1. Ensemble trépan (10) comprenant :
un porte-foret (12) ayant des première et seconde extrémités (20, 22) et un axe de rotation (18), dans lequel ladite seconde extrémité (22) est adaptée pour être attachée de manière fixe dans une machine de forage, et ladite première extrémité (20) comprend une encoche de porte-foret (30) orientée perpendiculairement au dit axe de rotation (18) dudit porte-foret (12) ayant une surface d'appui inférieure (32) sur au moins une partie de ladite encoche de porte-foret (30), ladite encoche de porte-foret (30) incluant également une bosse de positionnement (24) ayant une première surface et une seconde surface avec au moins une desdites surfaces étant positionnée à une position prédéterminée par rapport au dit axe de rotation (18) dudit porte-foret (12) et sensiblement parallèle au dit axe de rotation (18) et s'étendant depuis la surface d'appui inférieure (32), dans lequel ladite bosse de positionnement a au moins une première surface d'orientation (54) sur au moins une de ses parties,
un insert de forage (35) ayant une première surface de coupe (64) et une seconde surface de coupe et des premier et second côtés, ledit premier côté adapté pour avoir au moins une partie de celui-ci positionnée dans ladite encoche de porte-foret (30) en mise en prise d'appui avec ladite surface d'appui inférieure (32), dans lequel l'axe de rotation (18) dudit insert de forage (35), la bosse de positionnement (24) et le porte-foret (12) sont colinéaires, et incluant une encoche de positionnement (65) adaptée pour être positionnée dans une orientation prédéterminée par rapport à ladite bosse de positionnement (24) disposée dans ladite encoche de porte-foret (30) et formée dans ledit côté inférieur,
**caractérisé en ce que** ladite encoche de positionnement (65) inclut au moins une seconde surface d'orientation (66) qui coopère avec ladite première surface d'orientation (54) pour permettre au dit insert (35) d'être reçu dans une seule orientation contre ladite surface d'appui inférieure (32) seulement s'il est orienté correctement par rapport à ladite encoche de porte-foret (30).

2. Ensemble trépan selon la revendication 1, **caractérisé en ce que** ledit porte-foret (12) inclut, en outre, au moins un bras de serrage (34) disposé adjacent à ladite encoche de porte-foret (30), ledit au moins un bras de serrage (34) incluant au moins un alésage (36) communiquant avec ladite encoche de porte-foret (30), dans lequel un mécanisme de fixation (38) est positionné dans ledit alésage (36) pour mettre en prise ledit insert de forage (35) pour fixer ledit insert (35) à l'intérieur de ladite encoche de porte-foret (30).

3. Ensemble trépan selon la revendication 2, **caractérisé en ce que** ledit insert de forage (35) inclut au moins un alésage (70) coopérant avec ledit au moins un alésage (36) dans ledit au moins un bras de serrage (34), dans lequel un mécanisme de fixation (38) met en prise ledit au moins un alésage (70) dans ledit insert de forage (35) pour une fixation de celui-ci en position à l'intérieur de ladite encoche de porte-foret (30).

4. Ensemble trépan selon la revendication 3, **caractérisé en ce que** ledit au moins un alésage (36) dans ledit au moins un bras de serrage (34) est décalé par rapport au dit au moins un alésage (70) dans ledit insert de forage (35) au moins pour pousser ledit insert de forage (35) contre ladite surface d'appui inférieure (32) de ladite encoche de porte-foret (30).

5. Ensemble trépan selon l'une quelconque des revendications 1 à 4, **caractérisé en ce que** ladite bosse de positionnement (24) de ladite encoche de porte-foret (30) inclut, en outre, au moins une première surface d'appui (32) qui est disposée selon une relation prédéterminée par rapport au dit axe de rotation (18), et **en ce que** ladite encoche de positionnement (65) dudit insert de forage (35) a une partie de celui-ci reçue contre ladite première surface d'appui (32).

6. Ensemble trépan selon l'une quelconque des revendications 1 à 5, **caractérisé en ce que** ladite bosse de positionnement est une goupille de positionnement (24) ayant des première et seconde extrémités (50, 52), dans lequel ladite première extrémité (50) est reçue dans un alésage (26) formé dans ladite encoche de porte-foret (30), et ladite seconde extrémité (52) s'étend depuis la surface d'appui inférieure (32) de ladite encoche de porte-foret (30) sur une distance prédéterminée.

7. Ensemble trépan selon l'une quelconque des revendications 1 à 6, **caractérisé en ce que** ladite première surface d'orientation (54) de ladite bosse de positionnement (24) présente une forme prédéterminée, **et en ce que** ladite seconde surface d'orientation (66) de ladite encoche de positionnement (65) correspond sensiblement à ladite forme de sorte que lesdites première et seconde surfaces d'orientation (54, 66) correspondent l'une à l'autre de façon à être positionnées adjacentes l'une à l'autre lorsque l'insert de forage (35) est orienté correctement par rapport à ladite encoche de porte-foret (30).

8. Ensemble trépan selon l'une quelconque des revendications 1 à 7, **caractérisé en ce que** ledit insert de forage (35) est généralement en forme de plaque et présente une large prédéterminée (61) qui définit le diamètre extérieur d'un alésage formé par ledit ensemble (10).

9. Ensemble trépan selon l'une quelconque des revendications 1 à 8, **caractérisé en ce que** ledit second côté dudit insert de forage (35) inclut au moins une surface de coupe (64) formée sur celui-ci.

10. Ensemble trépan selon l'une quelconque des revendications 1 à 8, **caractérisé en ce que** ledit second côté dudit insert de forage (35) inclut au moins deux surfaces de coupe (64) s'étendant depuis un point central (62) et définissant la géométrie des points de l'insert (35).

11. Ensemble trépan selon la revendication 10, **caractérisé en ce que** ladite géométrie des points dudit insert de forage (35) est positionnée en une relation prédéterminée par rapport au dit axe de rotation (18) dudit porte-foret (12).

12. Ensemble trépan selon l'une quelconque des revendications 1 à 11, **caractérisé en ce qu'**un mécanisme de sollicitation (36, 38, 70) pousse ledit insert de forage (35) au moins contre ladite surface d'appui inférieure (32) de ladite encoche de porte-foret (30) si orienté correctement par rapport à ladite encoche de porte-foret (30).

13. Ensemble trépan selon l'une quelconque des revendications 1 à 12, **caractérisé en ce qu'**un mécanisme de sollicitation (36, 38, 70) pousse ledit insert de forage (35) au moins contre une surface de ladite bosse de positionnement (24) pour positionner ledit insert de forage (35) en une relation prédéterminée par rapport au dit axe de rotation (18).

14. Insert de forage pour utilisation dans un ensemble trépan (10) comprenant :
un élément de corps ayant un axe de rotation (18), un premier côté incluant une première surface et une seconde surface de coupe (64) associées à celui-ci, et un second côté incluant une encoche de positionnement (65) formée dans celui-ci, dans lequel ladite encoche de positionnement (65) est adaptée pour être positionnée dans une orientation prédéterminée par rapport à une bosse de positionnement (24) disposée dans une encoche de porte-foret (30) d'un porte-foret (12), de sorte que l'axe de rotation (18) de l'élément de corps est colinéaire avec un axe de rotation (18) du porte-foret (12) et de ladite bosse de positionnement (24),
**caractérisé en ce que** ledit élément de corps comporte des premier et second bords latéraux (60) qui définissent une largeur prédéterminée (61), et **en ce que** ladite encoche de positionnement (65) comporte au moins une surface d'appui (68) et au moins une surface d'orientation (66) permettant au dit insert de forage (35) de n'être positionné que dans une orientation dans un porte-foret (12) avec lequel ledit insert de forage (35) doit être utilisé, dans lequel ladite au moins une surface d'appui (68) est orientée sensiblement parallèle aux bords latéraux (60) dudit élément de corps et dans lequel ladite surface d'orientation est une surface chanfreinée (66).

15. Insert de forage selon la revendication 14, **caractérisé en ce que** ledit élément de corps est généralement en forme de plaque.

16. Insert de forage selon la revendication 14 ou 15, **caractérisé en ce que** ledit premier côté dudit corps inclut au moins deux surfaces de coupe (64) s'étendant depuis un point central (62) dudit premier côté et définissant une géométrie des points qui est positionnée en une relation prédéterminée par rapport à au moins une surface d'appui (66) associée à ladite encoche de positionnement (65).
